# EUROPÄISCHE PATENTANMELDUNG

(11) **EP 3 290 767 A1**
(43) Veröffentlichungstag der Anmeldung: **07.03.2018**
(21) Anmeldenummer: 17175608.3
(22) Anmeldetag: 13.06.2017
(51) Int. Cl.: F16L 11/10, F16L 11/12

(54) **SCHLAUCHLEITUNG**

(30) Priorität: 02.09.2016 DE 102016216605
(71) Anmelder: ContiTech Schlauch GmbH, 30165 Hannover (DE)
(72) Erfinder: Hellhund, Jonas, 60438 Frankfurt am Main (DE)
(74) Vertreter: Finger, Karsten

(57) **Zusammenfassung**

Die Erfindung betrifft eine Schlauchleitung (1)zum Fluidtransport mit einer Innenlage (3) aus einem Fluor-Kunststoff, insbesondere PTFE und mindestens einer Außenlage (4), wobei die Außenlage (4) eine Elastomermatrix aufweist. Der Erfindung lag die Aufgabe zugrunde, eine Schlauchleitung der eingangs geschilderten Art so zu verbessern, dass eine gute Haftung zwischen Innenlage (3) aus PTFE und Elastomermatrix der Außenlage (4) auch ohne aufwändige chemisch-physikalische Verbindungen und insbesondere ohne eine Zwischenschicht erreichbar ist. Diese Aufgabe wird dadurch gelöst, dass die Innenlage (3) auf ihrer Außenseite nach außen abragende Elemente (6, 9, 11) aufweist, und die Außenlage (4) zu den nach außen abragenden Elementen (6, 9, 11)der Innenlage (4) korrespondierende Nuten (8, 12) aufweist, wobei die nach außen abragenden Elemente (6, 9, 11) der Innenlage (3) in die Nuten (8, 12) der Außenlage (4) formschlüssig einrastbar sind. Die Erfindung betrifft außerdem ein Verfahren zur Herstellung der erfindungsgemäßen Schlauchleitung.

## Beschreibung

Die Erfindung betrifft eine Schlauchleitung zum Fluidtransport mit einer Innenlage aus einem Fluor-Kunststoff, insbesondere PTFE und mindestens einer Außenlage, wobei die Außenlage eine Elastomermatrix aufweist.

In der Lebensmittel- oder Pharmaindustrie sind Schläuche der genannten Art notwendig, da die zu transportierenden Fluide nicht verunreinigt werden dürfen. Dazu eignet sich insbesondere Polytetrafluorethylen (PTFE).

PTFE weist jedoch nur eine geringe Festigkeit auf, sodass die Drücke im Schlauch meist mittels einer stützenden Außenlage aus Elastomermaterial abgefangen werden, wobei in der Außenanlage auch Festigkeitsträger in Form von Geweben, Gestricken oder Gewirken eingebettet sein können.

Eine haltbare Verbindung zwischen PTFE und elastomerem Material ist auf chemischem Wege schwierig, da die einerseits erwünschten Eigenschaften des PTFE andererseits die Verbindung mit anderen Werkstoffen erschweren.

In der DE 10 2000 037 452 A1 ist ein Schlauch offenbart, bei dem die Innenlage aus PTFE mittels verschiedener Methoden mit einer Zwischenschicht chemisch-physikalisch fest verbindbar ist, wobei die Zwischenschicht ihrerseits mit dem Elastomer gut verbindbar ist.

In der GB 128 32 16 A ist der Verbund aus einem Kunststoff-Innenschlauch und einer Zwischenschicht, die nicht aus elastomerem Material besteht, noch dadurch verbessert, dass durch die wellschlauchähnliche Form des Innenschlauches ein Formschluss die Verbindung mit der Zwischenschicht verbessert.

Die genannten Lösungen beruhen jedoch auch auf der recht aufwendigen chemisch-physikalischen Verbindungstechnik, wobei immer auch eine Zwischenschicht erforderlich ist. Eine wellschlauchähnliche Form des Innenschlauches behindert außerdem den Durchfluss des Fluids.

Der Erfindung lag die Aufgabe zugrunde, eine Schlauchleitung der eingangs geschilderten Art so zu verbessern, dass eine gute Haftung zwischen Innenlage aus PTFE und Elastomermatrix der Außenlage auch ohne aufwändige chemisch-physikalische Verbindungen und insbesondere ohne eine Zwischenschicht erreichbar ist.

Diese Aufgabe wird dadurch gelöst, dass die Innenlage auf ihrer Außenseite nach außen abragende Elemente aufweist, und die Außenlage zu den nach außen abragenden Elementen der Innenlage korrespondierende Nuten aufweist, wobei die nach außen abragenden Elemente der Innenlage in die Nuten der Außenlage formschlüssig einrastbar sind.

Durch die ineinandergreifenden Elemente der Innen- und Außenlage ist eine mechanische, formschlüssige Verbindung zwischen den Lagen erreichbar, ohne dass eine chemische Reaktionsfähigkeit zwischen den Lagen bestehen muss.

In einer Weiterbildung der Erfindung sind die nach außen abragenden Elemente der Innenlage wulstförmig ausgebildet und weisen die Nuten der Außenlage einen halbrunden, zu den Wülsten der Innenlage korrespondierende Nuten auf.

Durch diese Anordnung ist eine axiale Festlegung der Innen- mit der Außenlage möglich

In einer Weiterbildung der Erfindung weisen die Elemente der Innenlage Stege und Ringwülste auf, wobei die Stege zwischen der Innenlage und den Ringwülsten angeordnet sind, sodass die nach außen abragenden Elemente der Innenlage einen etwa pilzförmigen Querschnitt aufweisen und weisen die Nuten der Außenlage in Richtung auf die Innenlage liegende Hinterschnitte auf, wobei die Nuten mit den Hinterschnitten um die pilzförmigen Elemente der Innenlage herum greifen.

Durch diese Anordnung ist nicht nur eine axiale, sondern auch eine radiale Festlegung der Innen- mit der Außenlage möglich.

In einer Weiterbildung der Erfindung sind die nach außen abragenden Elemente der Innenlage und die korrespondierenden Nuten der Außenlage ringförmig um die Innenlage herum angeordnet.

Die ringförmigen Elemente gewährleisten eine besonders gute axiale Festlegung der Lagen gegeneinander.

In einer Weiterbildung der Erfindung sind die nach außen abragenden Elemente der Innenlage und die korrespondierenden Nuten der Außenlage schraubenförmig um die Innenlage herum angeordnet.

Durch die Schraubenform der Elemente ist, insbesondere bei kürzeren Schläuchen, eine leichte Montage möglich.

Die Erfindung betrifft weiterhin ein Verfahren zur Herstellung der erfindungsgemäßen Schlauchleitungen.

Der Erfindung lag die Aufgabe zugrunde, ein Verfahren zu schaffen, mit dem die Herstellung der erfindungsgemäßen Schläuche besonders einfach möglich ist.

Diese Aufgabe wird dadurch gelöst, dass das Verfahren mindestens folgende Arbeitsschritte aufweist, nämlich
a) Herstellung der Innenlage mit nach außen abragenden Elementen aus einem Fluor-Kunststoff mit einem an sich bekannten Verfahren,
b) Einlegen der fertigen Innenlage in eine Werkzeugform, wobei die Werkzeugform einen Hohlraum aufweist, dessen äußere Begrenzung der Form der herzustellenden Schlauchleitung entspricht und die Innenlage ein Stützelement aufweist, dass im Inneren der Innenlage angeordnet ist,
c) Einbringen eines unvulkanisierten Elastomer-Werkstoffes in die Werkzeugform, wobei der Elastomer-Werkstoff gleichmäßig um die Innenlage herum angeordnet wird und der Elastomer-Werkstoff eine Vulkanisationtemperatur aufweist, bei der der Fluor-Kunststoff der Innenlage noch stabil ist,
d) Aufheizen der Werkzeugform auf Vulkanisationtemperatur und Vulkanisation des Elastomer-Werkstoffs um die Innenlage herum, wobei die zu den abragenden Elementen der Innenlage korrespondierenden Nuten ausgebildet werden,
e) Abkühlen der Werkzeugform und entnehmen der fertigen Schlauchleitung.

Durch dieses Verfahren ist es möglich, beliebig geformte Elemente von der Innenlage abragen zu lassen, da der Elastomerwerkstoff der Außenlage bei der Vulkanisation um diese Elemente herumfließt und so die Nuten passgenau ausbildbar sind.

Anhand der Zeichnung wird nachstehend ein Beispiel der Erfindung näher erläutert. Es zeigt
Fig. 1 einen Abschnitt einer erfindungsgemäßen Schlauchleitung in einem Längsschnitt mit wulstförmigen Elementen der Innenlage,
Fig. 2 einen Abschnitt einer Erfindung gemessen Schlauchleitung in einem Längsschnitt mit pilzförmigen Elementen der Innenlage.

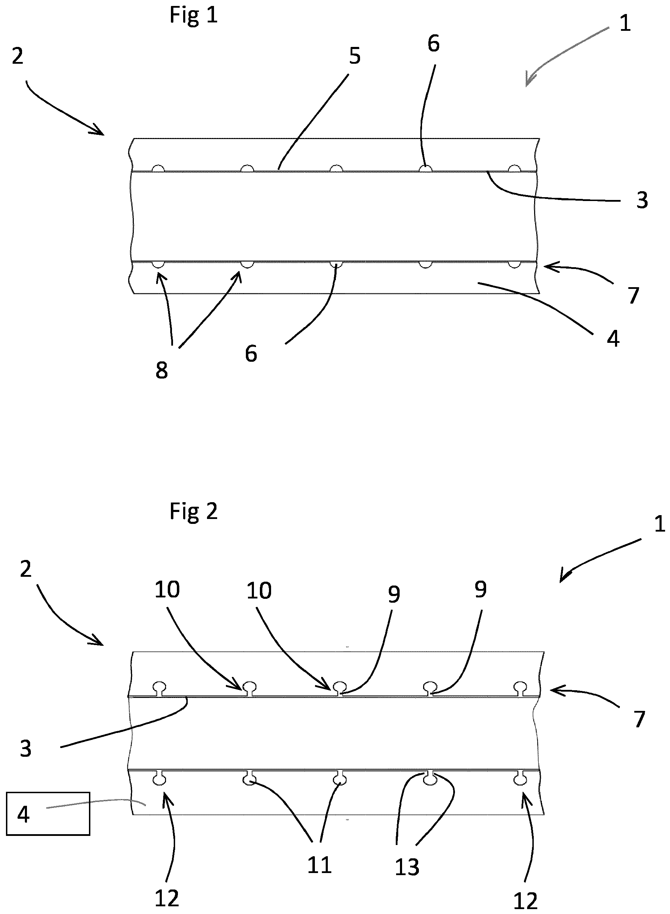

In der Fig. 1 ist ein Abschnitt einer erfindungsgemäßen Schlauchleitung 1 in einem Längsschnitt gezeigt. Die Schlauchleitung 1 weist eine Wand 2 auf, die aus einer Innenlage 3 und einer Außenlage 4 gebildet ist. Die Innenlage 3 ist aus einem PTFE ausgebildet und weist eine Innenhaut 5 und in vorbestimmten axialen Abständen nach außen abragende, im Querschnitt halbrunde Wülste 6 auf, die ringförmig oder schraubenförmig um die Innenhaut 5 herum angeordnet sind und mit der Innenhaut 5 die homogene Innenlage 3 bilden.

Um die Innenlage 3 herum ist die Außenlage 4 angeordnet. Sie besteht aus einem elastomerem Werkstoff.

In einer Kontaktzone 7 der Außenlage 4 mit der Innenlage 3 sind in der Außenlage 4 um die halbrunden Wülste 6 der Innenlage 3 herum Nuten 8 ausgebildet, die in ihrer Form genau mit den Wülsten 6 korrespondieren. Diese Form der Nuten 8 ist beispielsweise bei der Vulkanisation der Außenlage 4 um die bereits vor der Vulkanisation fertige Innenlage 3 erzeugbar. Durch das Ineinandergreifen der Wülste 6 und der Nuten 8 in der Kontaktzone 7 besteht ein mechanischer Formschluss zwischen der Innenlage 3 und der Außenlage 4. Eine chemische Verbindung oder eine Klebung zwischen der Innenlage 3 und der Außenlage 4 ist nicht erforderlich.

In Fig. 2 ist eine weitere Ausführungsform der erfindungsgemäßen Schlauchleitung 1 ebenfalls in einem Längsschnitt gezeigt.

Die Innenlage 3 weist hier in vorbestimmten axialen Abständen nach außen abragende Stegen 9 auf, die an ihrem äußeren Ende 10 jeweils Ringwülste 11 aufweisen. Diese Steg-Wulst-Elemente 9,11 weisen daher etwa einen pilzförmigen Querschnitt auf.

Die Außenlage 4 weist zu den Steg-Wulst-Elementen 9,11 korrespondieren Nuten 12 auf, die mit Hinterschnitten 13 und die Ringwülste 11 herum greifen.

Dieses Ineinandergreifen der Elemente 9, 11,12 und 13 ermöglicht neben der axialen auch eine radiale Festlegung der Innenlage 3 gegen die Außenlage 4.

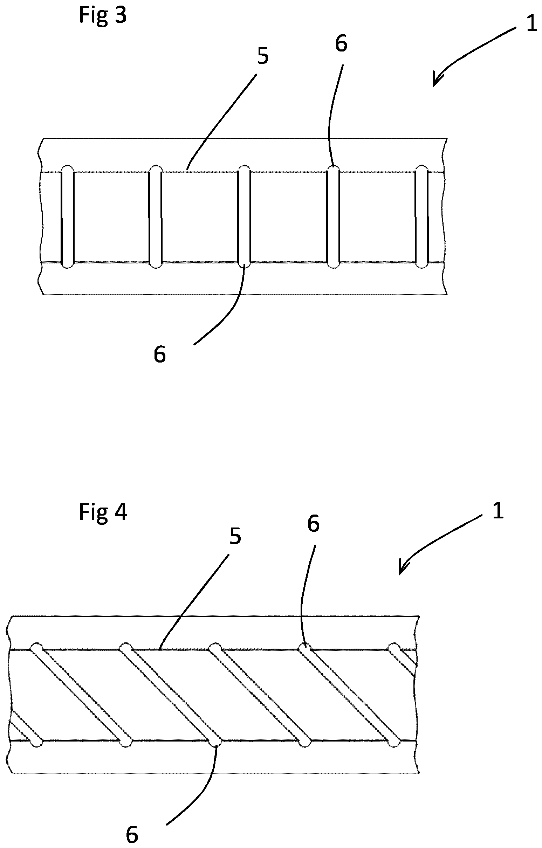

In der Fig. 3 ist eine Ausführungsform der erfindungsgemäßen Schlauchleitung 1 in einer Prinzipskizze dargestellt, bei der die von der Innenhaut 5 nach außen abragenden Wülste 6 ringförmig auf der Innenhaut 5 angeordnet sind.

In der Fig. 4 ist eine Ausführungsform der erfindungsgemäßen Schlauchleitung 1 in einer Prinzipskizze dargestellt, bei der die von der Innenhaut 5 nach außen abragenden Wülste 6 schraubenförmig auf der Innenhaut 5 angeordnet sind.

Die Wülste 6 in Fig. 3 und Fig. 4 sind hier in einer Querschnittsform dargestellt, die der Ausführung nach Fig. 1 entspricht. Selbstverständlich können die Wülste auch eine Querschnittsform nach Fig. 2 aufweisen, ohne dass dies hier explizit dargestellt ist.

### Bezugszeichenliste

### (gehört zur Beschreibung)

- 1: Schlauchleitung
- 2: Wand der Schlauchleitung 1
- 3: Innenlage
- 4: Außenlage
- 5: Innenhaut der Innenlage 3
- 6: Wülste auf der Innenhaut 5
- 7: Kontaktzone zwischen Innenlage 3 und Außenlage 4
- 8: Nuten der Außenlage 4
- 9: Stege
- 10: äußeres Ende der Stegen 9
- 11: Ringwülste am Ende der Stegen 9
- 12: pilzförmige Nuten der Außenlage 4
- 13: Hinterschnitte der Nuten 12

## Patentansprüche

1. Schlauchleitung (1) zum Fluidtransport mit einer Innenlage (3) aus einem Fluor-Kunststoff, insbesondere PTFE und mindestens einer Außenlage (4), wobei die Außenlage (4) eine Elastomermatrix aufweist,
**dadurch gekennzeichnet, dass** die Innenlage (3) auf ihrer Außenseite nach außen abragende Elemente (6, 9, 11) aufweist, und die Außenlage (4) zu den nach außen abragenden Elementen (6, 9, 11)der Innenlage (4) korrespondierende Nuten (8, 12) aufweist, wobei die nach außen abragenden Elemente (6, 9, 11) der Innenlage (3) in die Nuten (8, 12) der Außenlage (4) formschlüssig einrastbar sind.

2. Schlauchleitung (1) nach Anspruch 1, **dadurch gekennzeichnet, dass** die nach außen abragenden Elemente (6) der Innenlage (3) wulstförmig ausgebildet sind und dass die Nuten (8, 12) der Außenlage (4) einen halbrunden, zu den Wülsten (6) der Innenlage (3) korrespondierende Nuten (8) aufweisen.

3. Schlauchleitung (1) nach Anspruch 1, **dadurch gekennzeichnet, dass** die Elemente (9, 11) der Innenlage (3) Stege (9) und Ringwülste (11) aufweisen, wobei die Stege (9)zwischen der Innenlage (3) und den Ringwülsten (11) angeordnet sind, sodass die nach außen abragenden Elemente (9, 11) der Innenlage (3) einen etwa pilzförmigen Querschnitt aufweisen und dass die Nuten (12) der Außenlage (4) in Richtung auf die Innenlage (3) liegende Hinterschnitte (13) aufweisen, wobei die Nuten (12) mit den Hinterschnitten (13) um die pilzförmigen Elemente (9, 11) der Innenlage (3) herum greifen.

4. Schlauchleitung (1) nach Anspruch 1, 2 oder 3, **dadurch gekennzeichnet, dass** die nach außen abragenden Elemente (6, 9, 11) der Innenlage (3) und die korrespondierenden Nuten (8,12) der Außenlage (4) ringförmig um die Innenlage (3) herum angeordnet sind.

5. Schlauchleitung (1) nach Anspruch 1, 2 oder 3, **dadurch gekennzeichnet, dass** ie nach außen abragenden Elemente (6, 9, 11) der Innenlage (3) und die korrespondierenden Nuten (8, 12) der Außenlage (4) schraubenförmig um die Innenlage (3) herum angeordnet sind.

6. Verfahren zur Herstellung der erfindungsgemäßen Schlauchleitungen (1), **dadurch gekennzeichnet, dass** das Verfahren mindestens folgende Arbeitsschritte aufweist, nämlich
a) Herstellung der Innenlage (3) mit nach außen abragenden Elementen 6, 9, 11) aus einem Fluor-Kunststoff mit einem an sich bekannten Verfahren,
b) Einlegen der fertigen Innenlage (3) in eine Werkzeugform, wobei die Werkzeugform einen Hohlraum aufweist, dessen äußere Begrenzung der Form der herzustellenden Schlauchleitung entspricht und die Innenlage ein Stützelement aufweist, dass im Inneren der Innenlage angeordnet ist,
c) Einbringen eines unvulkanisierten Elastomer-Werkstoffes in die Werkzeugform, wobei der Elastomer-Werkstoff gleichmäßig um die Innenlage (3) herum angeordnet wird und der Elastomer-Werkstoff eine Vulkanisationtemperatur aufweist, bei der der Fluor-Kunststoff der Innenlage (3) noch stabil ist,
d) Aufheizen der Werkzeugform auf Vulkanisationtemperatur und Vulkanisation des Elastomer-Werkstoffs um die Innenlage (3) herum, wobei zu den abragenden Elementen (6, 9, 11) der Innenlage (3) korrespondierenden Nuten (8, 12) ausgebildet werden,
e) Abkühlen der Werkzeugform und entnehmen der fertigen Schlauchleitung (1).
